# EUROPEAN PATENT SPECIFICATION

(11) **EP 2 437 608 B1**
(45) Date of publication and mention of the grant of the patent: **19.08.2015**
(21) Application number: 10789814.0
(22) Date of filing: 04.06.2010
(51) Int. Cl.: A21C 11/12, A21C 5/00, A23L 1/16, B26D 1/00

(54) **CUTTING DEVICE AND METHOD FOR CUTTING**
SCHNEIDEVORRICHTUNG UND VERFAHREN ZUR SCHNEIDEN
DISPOSITIF DE COUPE ET PROCÉDÉ ASSOCIÉ

(30) Priority: 05.06.2009 SE 0950415
(43) Date of publication of application: 11.04.2012
(73) Proprietor: Rollsroller AB, 653 43 Karlstad (SE)
(72) Inventor: JOHANSSON, Göran, S-653 43 Karlstad (SE)
(74) Representative: Andrén, Bertil
(86) International application number: PCT/SE2010/050617
(87) International publication number: WO 2010/147536

(56) References cited:
- EP-A1- 0 447 367
- WO-A1-01/68329
- CH-A- 314 903
- DE-C- 232 509
- GB-A- 581 852
- GB-A- 191 001 412
- US-A- 2 437 202
- US-A- 4 193 272
- US-A- 5 514 397
- US-B1- 6 562 389

## Description

The present invention relates to a cutting device for cutting predetermined figures out of an elongated, thin portion of a plastically deformable material, said cutting device comprising a table top, which exhibits a planar table surface for supporting the elongated portion.

The present invention also relates to a method for cutting predetermined figures out of an elongated, thin portion of a plastically deformable material.

Furthermore, the present invention relates to a method of use of the cutting device.

The invention particularly relates to a device and a method for cutting figures out of a rolled-out dough, e.g. a pasta dough, but the invention can also be used for cutting out patterns in other types of doughs. As used herein, "dough" in general terms means a viscous, plastically deformable body, which preferably is rollable.

In large-scale manufacturing of filled pasta, such as e.g. Tortelloni, Panzotti, Cannelloni, Caramelle and Delizie, usually one or several devices are used below which a travelling sheet of pasta passes one or a plurality of stations, in which devices are processing the pasta sheet in different ways. A first station can e.g. cut figures out of the pasta sheet, a second station place filling on the cut-out figures, and a third station fold over and curl the pasta dough over the filling. For example, US 2,437,202, EP 0 447 367 A1 and US 5,514,397 describe such devices, where a travelling pasta dough is adapted to pass below or through the device.

In small-scale manufacturing of filled pasta, on the other hand, the manufacturing is normally done manually. A pasta maker rolls out a pasta dough and winds it onto a reel. Thereafter, he unrolls the dough onto a table and cuts square-shaped pieces out of the dough. The cutting is done by hand with a special knife, which has a circular knife blade with a wavy knife edge. The knife blade is rotatably attached at its centre to a handle, which the pasta maker holds when he cuts the square-shaped pieces out of the dough. Depending on the pasta that is to be made, the pieces normally have a size of about 130x130 mm or 150x150 mm. Thereafter, the pasta maker places the desired filling on the cut-out pieces, which is normally done by hand with a pastry bag, which the pasta maker moves over the pieces. When the filling has been piped onto the cut-out pieces, the pasta maker folds over the pasta pieces so that the filling is baked into the pasta dough.

The cutting method above is rather time-consuming, since each piece is cut out by hand with a knife. Furthermore, there are limitations in how wide the table can be, since it should not be wider than to allow the pasta maker to reach across the entire surface of the table. It is furthermore not ergonomically advantageous to cut out the pieces in this way, since the pasta maker has to lean over the table in connection with the cutting. The corresponding problem of course applies to the piping method itself, where the filling is placed on each cut-out piece. In the piping method, there is also the difficulty of dispensing each filling portion, so that the amount of filling becomes equal on each cut-out piece.

GB581852 discloses a machine for cutting continuously moving pastry strips or the like into separate cookies, while the pastry strips are transported on a belt conveyor. For cutting the pastry strips, the machine comprises a reciprocating carriage having a cutter roll extending in the direction of the conveyor belt and having a plurality of circular cutting knives. During a cutting period, the carriage moves along the conveyor belt at the same speed as that of the belt. Simultaneously, the cutter roll moves across the belt to cut the strips into separate cookies. Then, the cutter roll passes over the side edge of the conveyor belt, the carriage is stopped, and during a return period, the cutter roll is moved down and under the belt, and the carriage and the cutter roll are returned to their starting positions.

DE232509 discloses a device for notching dough lumps (before baking them in an oven to form a German style bread roll of "Semmel" type). When notching a piece of something, you get a notch in the piece. The notching device comprises a box, a frame located in the box and having elongated compartments, in which rows of dough lumps to be notched may be placed one after the other, and a notching roll of rolling pin type. To prevent the dough lumps from adhering to the circular knives of the notching roll, there are wires tensioned above the compartments, which wires extend along the compartments and bear on the knife sides and block dough lumps that may tend to be entrained by the rotation of the knives.

The object of the present invention is to produce a new, improved device and a new method which facilitate the cutting of figures or pieces out of a sheet of a plastically deformable material, and particularly the cutting of figures or pieces out of a rolled-out food dough, e.g. a pasta dough.

In particular, the object of the invention is to produce a new, improved device and a new method for small-scale manufacturing of filled pasta, wherein the device comprises a tool that is adapted to pass across a stationary, rolled-out pasta dough.

The cutting device according to the invention comprises
- a fixed table top that exhibits a planar table surface for supporting the elongated portion ;
- two elongated guide and support means , which are arranged at each long side of the fixed table top ;
- a traverser , which is movable along the guide and support means in the longitudinal direction of the table top , and which extends transversely to the table top substantially perpendicularly to said longitudinal direction and comprises a rotatable cutter roll , which extends across the major part of the width of the table top and comprises cutting elements for cutting said figures out of the elongated portion , wherein the traverser is adapted to be moved along the guide and support means with the cutter roll in a cutting position for cutting out said figures ; and
- rotating means for causing the cutter roll to rotate, during the movement of the cutter roll in the cutting position, at a peripheral speed substantially corresponding to the translational speed of the cutter roll across the table surface .

In the following, the invention will be described more closely with reference to accompanying drawings.
Figure 1 shows a perspective view of an embodiment of the device according to the invention, said device being intended for cutting up pasta dough.

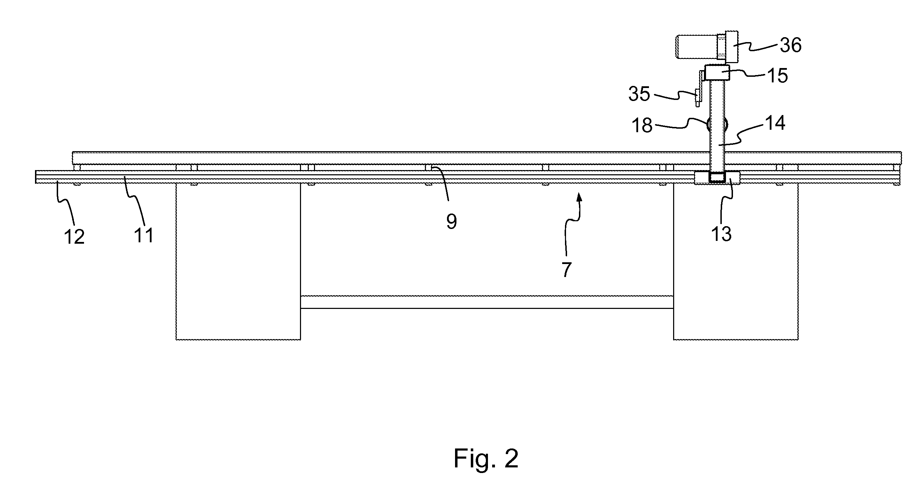

Figure 2 shows the device of Figure 1 in a view from the long side of the device.
Figure 3 shows the device of Figure 1 in a view from the short side of the device, where a cutting means of the device is in an upper end position.
Figure 4 shows the device of Figure 1 in a view from the short side of the device, where the cutting means is in a lower end position.
Figure 5 shows the device of Figure 1 in a view from above, where a pasta dough is placed on a table top of the device.
Figure 6 shows a first embodiment of a cutting means of a device according to the invention.
Figure 7 shows a second embodiment of a cutting means of a device according to the invention.
Figures 8-10 illustrate interaction between a knife of the cutting means of Figure 7 and a pasta dough.

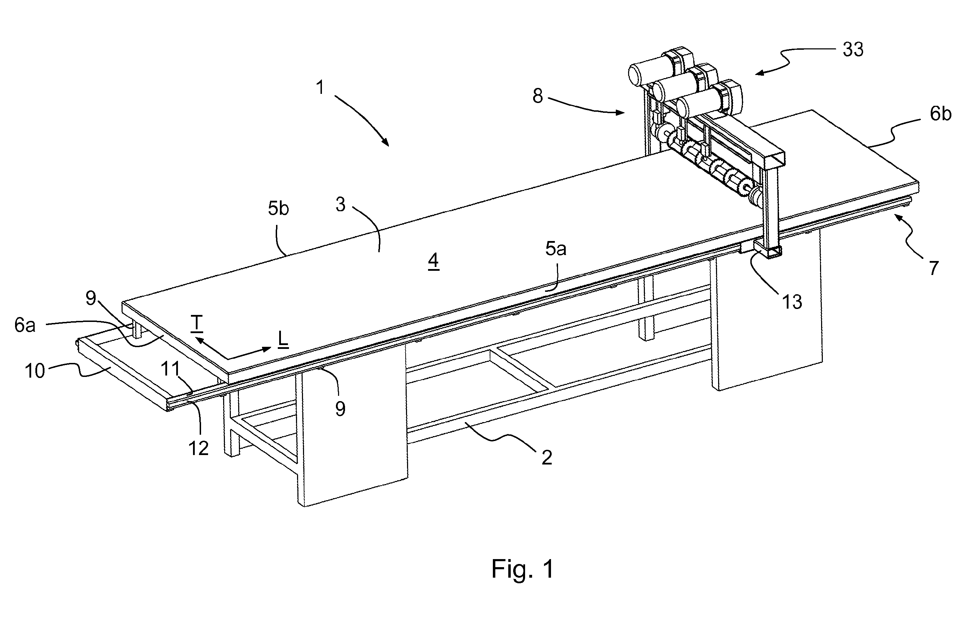

Figure 1 shows a device according to the invention in the form of a cutting table for cutting predetermined figures or pieces out of a pasta dough according to a predetermined pattern. The cutting table 1 comprises a support frame 2, which in the shown embodiment comprises a framework with struts and ties forming a leg frame which, if needed, can be equipped with lockable support wheels (not shown) at the bottom for movement of the cutting table 1. The support frame 2 is preferably of metal, and most preferably of stainless steel.

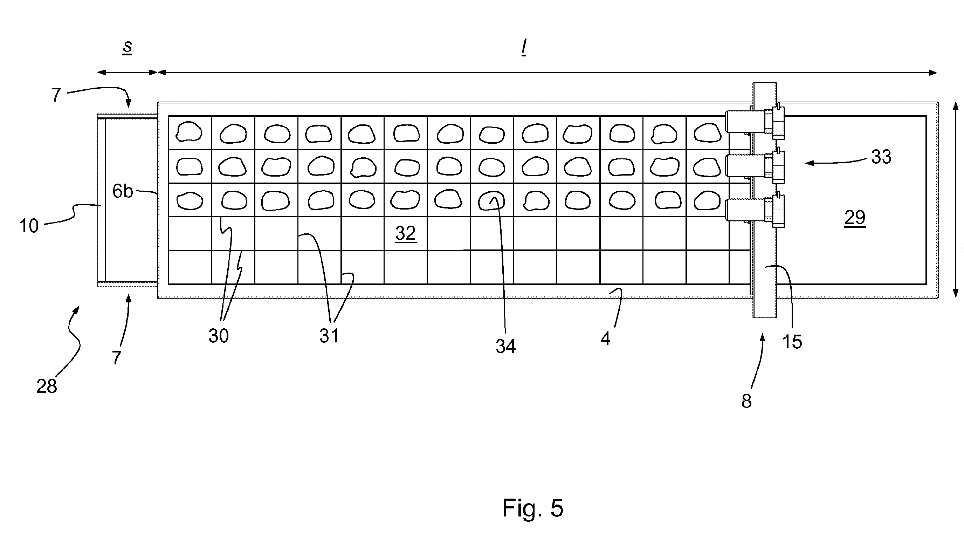

Furthermore, the cutting table 1 comprises a substantially rectangular table top 3, which is supported by the support frame 2 and exhibits a substantially horizontal and planar table surface 4 that is delimited by two parallel long sides 5a, 5b and two parallel short sides 6a, 6b of the table top 3. The table top 3 is fixedly attached to the support frame 2 so that the support frame 2 and the table top 3 form a stable and non-resilient structure. The table top 3 is preferably of metal, and most preferably comprises a frame of stainless steel and a continuous, stainless plate, which rests on the frame. It is appreciated, however, that the table top 3 can be of other materials, e.g. stone. In its transverse direction T, the table top 3 has a predetermined width *b*, which is preferably approx. 40-160 cm and, in its longitudinal direction L, a predetermined length *l*, which is preferably approx. 200-450 cm (see Figure 5).

Furthermore, the cutting table 1 comprises guide and support means in the form of two parallel guides 7, which extend in the longitudinal direction L of the table top 3 at each long side 5a, 5b, and a traverser 8, which is adapted to run along the guides 7.

The guides 7 are fixedly attached to the table top 3 via vertical bars 9, which are attached to the bottom side of the table top 3, so that the guides 7 extend in parallel to and slightly below and inside the long sides 5a, 5b of the table top 3. At one short side 6b of the table top 3, the guides 7 extend up to the edge of the table top 3. At the other short side 6a of the table top 3, the guides 7 extend a predetermined distance *s* (see Figure 5) outside the table top 3, preferably approx. 20-60 cm, and are connected at their ends by a cross bar 10. In the shown embodiment, each guide 7 consists of an elongated, rectangular plate 11, which is fixedly attached to the horizontal bars 9, and an elongated beam 12, which has a rectangular cross-section and is fixedly attached to the plate 11 so that one long side of the beam 12 is turned away from the cutting table 1. The vertical bars 9, the cross bar 10, the plates 11 and the beams 12 are preferably of stainless steel.

The traverser 8 comprises travelling means in the form of two carriages 13, each being adapted to run along a respective one of the guides 7. Each carriage 13 comprises slide, ball or roller bearings, suitable for this purpose, which are adapted to interact with slide, ball or roller surfaces of the guide 7. The carriages 13 have a predetermined extension in the longitudinal direction of the guides 7, whereby it is ensured that the carriages 13 are mutually parallel. The traverser 8 further comprises two substantially vertical posts 14, each being fixedly attached at its lower end to a respective one of the carriages 13 and extending upwardly above the plane of the table surface 4 outside the respective long side 5a, 5b of the table top 3. The traverser 8 also comprises an elongated, rigid and substantially horizontal boom 15, which rests on and is fixedly attached to the upper ends of the posts 14.

Accordingly, the guides 7 constitute guide and support means for the traverser 8, wherein the carriages 13 with their slide, ball or roller bearings constitute the travelling means of the traverser 8, comprising guiding and bearing means, which interact with the guide and support means in order to enable a linear movement of the traverser 8 in the longitudinal direction L of the table top 3 while maintaining a good stability of the traverser 8, in a vertical direction as well as in the movement direction of the traverser 8. Accordingly, the traverser 8 extends in the transverse direction T of the table top 3, but is adapted to move in the longitudinal direction L of the table top 3.

Here, it is appreciated that the extension of the guides 7 outside the table top 3, e.g. in parallel to and slightly below and inside the long sides 5a of the top 3, as in the shown embodiment, means that the traverser 8 is allowed movement across a table surface 4 that is entirely free of upwardly projecting portions or other obstacles.

Inside of each post 14 and above the respective long side 5 of the table top 3, the traverser 8 comprises a vertically aligned attaching element 16, which is connected at its upper end to the boom 15 and extends vertically downward therefrom. At its lower end, each attaching element 16 comprises an axle seat 17, in which axle seats 17 a cutting means in the form of a horizontal cutter roll 18 is rotatably attached. Accordingly, the attaching means 16 with the axle seats 17 constitute attachment means for the cutter roll 18, which extends substantially across the entire width *b* of the table top 3.

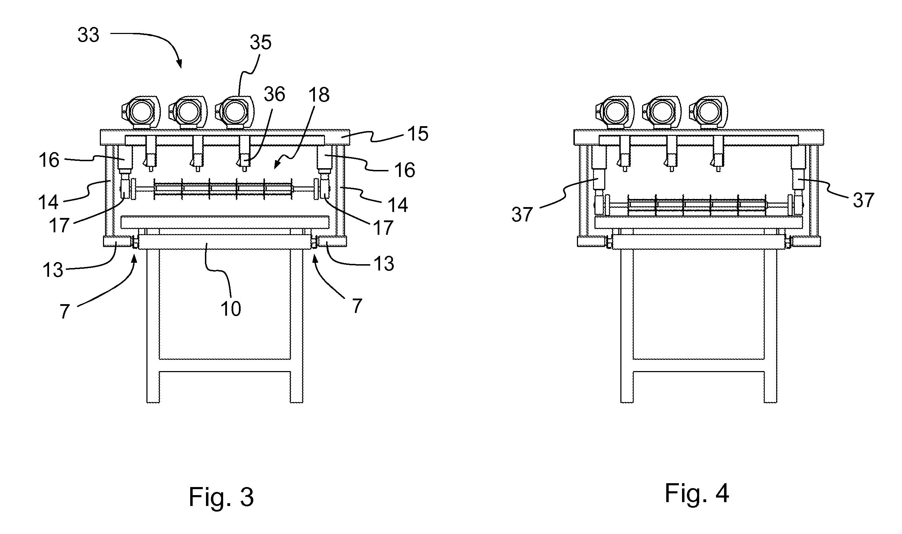

Preferably, the attaching elements 16 comprise actuators 37 for vertical movement of the cutter roll 18 between an upper end position (see Figure 3), where the cutter roll 18 is not in contact with the table surface 4, and a lower end position (see Figure 4), constituting a cutting position of the cutter roll 18, where the cutter roll 18 interacts with the table surface 4. Such an actuator 37 preferably comprises at least one pneumatic cylinder arranged in each attaching element 16 for simultaneous, vertical movement of the axle seats 17, but alternatively other actuators, such as hydraulic, electric or mechanical actuators, can be used.

Alternatively, the cutter roll 18 can be permanently mounted in a position corresponding to the lower end position.

Irrespectively of whether the cutter roll 18 is vertically adjustable or not, each attaching element 16 preferably comprises a resilient means (not shown) which, on the one hand, ensures that the cutter roll 18 is pressed against the table surface 4 with a predetermined, desired force when the cutter roll 18 is in contact with the table top 3 and, on the other hand, allows the axle seats 17 a certain vertical freedom of movement independently of each other. The resilient means can, for example, comprise a pressure spring acting on the axle seat 17 with a downwardly directed force.

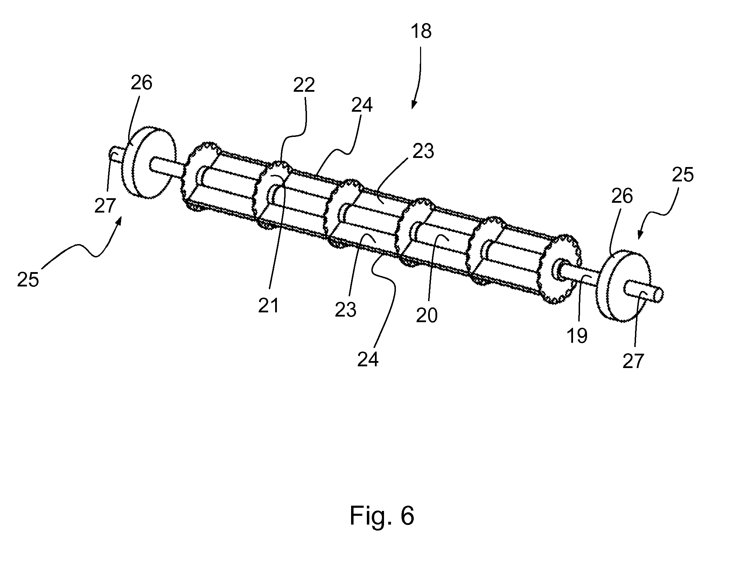

The cutter roller 18 comprises a first, inner, continuous axle 19 (see Figure 6), which extends across the entire length of the cutter roll 18, and a second, outer, tubular axle 20, which is arranged concentrically on the inner axle 19 and is fixedly connected thereto.

The cutter roll 18 further comprises first cutting elements in the form of six equally shaped circular knives 21, which are fixedly connected to the outer axle 20 and arranged concentrically thereto. The circular knives 21 are positioned at equal mutual distances along the length of the outer axle 20, where the outer circular knives are positioned at the ends of the outer axle 20. Each circular knife 21 has an edge 22, which extends in the circumferential direction around the periphery of the circular knife 21 so that the distance between the edge 22 and the outer axle 20 is constant. Preferably, the edges 22 are wavy. Accordingly, the circular knives 21 define parallel, equidistant cutting planes, which are perpendicular to the axles 19 and 20.

The cutter roller 18 also comprises second cutting elements in the form of two planar knife plates 23, which are fixedly connected to the outer axle 20 and extend in parallel to the axles 19, 20 between the outer circular knives. Each knife plate 23 projects in a radial direction from the envelope surface of the outer axle 20 and exhibits at its free, outer long side a straight edge 24, which is parallel to the axles 19 and 20 and thus perpendicular to the edges 22 of the circular knives 21. Preferably, also the edges 24 are wavy. The knife plates 23 project from the outer axle 20 in opposite directions, and thus have a mutual angular distance that is 180°.

The protrusion of the knife plates 23 from the outer axle 20 is equal to the protrusion of the circular knives 21. In other words, the edges 24 of the knife plates 23 and the edges 22 of the circular knives 21 are arranged at the same distance from the outer axle 20. Accordingly, the edges 22 and 24 are arranged in the same cylindrical plane of the cutter roll 18.

The outer axle 20 is centered on the inner axle 19, in the axle direction of the cutter roll 18, and has a length that is smaller than the inner axle 19. Consequently, the inner axle 19 comprises portions 25 which project from the outer axle 20 on each side thereof. In each such portion 25, the cutter roll 18 comprises a circular support roller 26, which is fixedly connected to the inner axle 19 and is arranged concentrically thereon.

The choice of diameter of the support rollers 26 is dependent upon whether the cutting elements 21, 23 are to be allowed to make penetrating or only partially penetrating cuts in the pasta dough. If the cutting elements 21, 23 are to be allowed to make penetrating cuts in the pasta dough, in which case the cut-out figures are parted or separated after the cutting operation, each support roller 26 preferably has a radius that is slightly smaller, preferably approx. 0.25-1.0 mm smaller, than the protrusion of the cutting elements 21, 23 from the rotational axis of the cutter roll 18, which in the present design example means that the diameter of the support rollers 26 is preferably approx. 0.5-2.0 mm smaller than the diameter of the circular knives 21. If the cutting elements 21, 23 only are to be allowed to make or emboss partially penetrating cuts or patterns into the pasta dough, in which case the cut-out figures are continuous after the cutting operation, each support roller 26 preferably has a radius that is slightly larger than the protrusion of the cutting elements 21, 23 from the rotational axis of the cutter roll 18, wherein a smaller radius of the support rollers 26 produces shallower cuts or embossing patterns in the pasta dough than a larger radius. Accordingly, the support rollers 26 constitute positioning means for the knives 21, 23, in the sense that the radius of the support rollers 26 in relation to the protrusion of the cutting elements 21, 23 determines the depth of the cuts or patterns which the cutting elements 21, 23 produce in the pasta dough. In other words, the support rollers 26 constitute means for vertical positioning of the cutting elements 21, 23 when they are in the cutting position.

The support rollers 26 are positioned at a predetermined distance, preferably approx. 2-10 cm, from the respective end of the inner axle 19. Accordingly, the inner axle 19 exhibits, at each end, portions 27 which extend beyond the support roller 26. These portions 27 are adapted to interact with said axle seats 17 of the traverser 8 and thus serve as the axle stubs of the cutter roll 18.

In the shown embodiment, the cutter roll 18 is entirely of stainless steel, with the exception of the support rollers 26, which preferably are of a polymer material, e.g. polyurethane, Teflon or other hard plastic.

In the following, the function of the cutting table 1 according to the invention will be described with reference to Figure 5.

Before a cutting operation, the table surface 4 is cleared in that an operator moves the traverser 8 to a parking station 28 (see Figure 5), which is defined by the portion of the guides 7 that projects beyond the short side 6b of the table top 3, wherein the table surface 4 becomes freely accessible to the operator. Thereafter, the operator places the dough 29, which is to be cut up, on the table surface 4. This can be done in that the operator rolls out the dough directly onto the table surface 4 or, which is preferred, unrolls an already rolled-out dough onto the table surface 4. Thereby, the rolled-out dough forms a rolled-out, elongated, thin portion or sheet 29 on the table top 3. Thereafter, the operator moves the traverser 8 from the parking station 28, past the short side 6b, and in over the table surface 4. If the cutter roll 18 is vertically adjustable, the operator brings the cutter roll 18 to its lower end position at this stage, i.e. the cutting position, so that the support rollers 26 of the cutter roll 18 are caused to interact with the table surface 4. If the cutter roll 18 is not vertically adjustable, the support rollers 26 get in contact with table surface 4 in connection with the traverser 8 being caused to pass the short side 6b.

If the cutting device is set to make penetrating cuts in the pasta dough, also the circular knives 21 will be caused to interact with the table surface 4 when the cutter roll 18 is moved to the cutting position. If the cutting device 1 is set to make non-penetrating cuts in the pasta dough, there will be a small gap between the circular knives 21 and the table surface 4 when the cutter roll 18 is in the cutting position. In the following, it is assumed that the cutting device is set to make penetrating cuts in the pasta dough.

Thereafter, the operator moves the traverser 8 across the sheet 29 laid out on the table surface 4 so that the cutter roll 18, as a result of frictional action between the support rollers 26 and the table surface 4, is caused to rotate around its axis. A certain friction is also obtained between the circular knives 21 and the table surface 4, but in the shown embodiment it is primarily the friction between the support rollers 26 and the table surface 4 that causes the cutter roll 18 to rotate or roll across the table surface 4. While the cutter roll 18 rolls across the table surface 4, the circular knives 21 are caused to make continuous, longitudinal and, in this case, penetrating cuts 30 in the sheet 29, and the knife plates 23 are caused to alternately make transverse and penetrating cuts 31 therein. Accordingly, the first cutting elements, i.e. the circular knives 21, are adapted to make longitudinal cuts in the sheet 29, and the second cutting elements, i.e. the knife plates 23, are adapted to make transverse cuts. Accordingly, the edges 22 and 24 of the cutter roll 18 cut out a regular pattern in the sheet 29, comprising a plurality of rectangular figures or pieces 32, which recur regularly both in the transverse direction of the sheet 29 and in its longitudinal direction. In this case, the figures or pieces 32 are separated or parted after the cutting operation, since the cuts produced by the edges 22 and 24 of the cutter roll 18 are penetrating.

As a result of the friction between the support rollers 26 and the table surface 4, and also to some extent between the circular knives 21 and the table surface 4, the cutter roll 18 is caused to rotate at a peripheral speed, which is substantially the same as the speed at which the cutter roll 18 is moved across the table surface 4, i.e. at the translational speed of the cutter roll 18. Thus, in addition to constituting positioning means for the cutting elements 21 and 23, the support rollers 26 also constitute rotating means, which cause the cutter roll 18 to rotate at a peripheral speed that substantially corresponds to the translational speed of the cutter roll 18 across the table surface 4. It has been found that a correspondance between peripheral speed and translational speed of the cutter roll gives a better cutting result than if the peripheral speed and the translational speed were to differ.

Preferably, the operator moves the traverser 8 manually along the guides 7. Alternatively, the cutting table 1 can comprise an operator-controlled motor (not shown) for propelling the traverser 8 along the guides 7.

Preferably, the traverser 8 comprises a dispensing device 33 for dispensing filling portions 34 onto the cut-out dough portions 32. In the shown embodiment, the dispensing device 33 comprises three downwardly directed dispensing nozzles 35, each being connected to a container 36 for the filling. The nozzles 35 are arranged next to each other on one long side of the boom 15 and the containers 36 are arranged next to each other on the top side of the boom 15. The nozzles 35 are thus arranged next to each other in the transverse direction T of the table top 3. The nozzles 36 can be permanently positioned at predetermined positions along the longitudinal direction of the boom 15, but preferably each nozzle 36 is arranged on a carriage (not shown), running on a guide (not shown) along the boom 15, whereby the nozzle 36, either manually or motorizedly, can be placed at an optional position along the longitudinal direction of the boom 15.

The process of dispensing the filling can be done manually in that the operator manually causes each nozzle 36 to dispense a filling portion 33 when the nozzle 36 is located above a cut-out dough portion 32. Alternatively, the cutting table 1 can comprise a steering and control device (not shown) which, while taking into consideration the shape of the cutter roll 18 and thus taking into consideration the shape of the cut-out pattern, automatically dispenses a filling portion 33 when the nozzle 36 passes above a cut-out dough portion 32. In case the cutting table 1 comprises said steering and control device, said motor for propelling the traverser 8 along the cutting table 1, and said motor or motors for propelling the nozzles 36 along the boom 15, the steering and control device is preferably adapted to synchronize all movements, on the one hand, and the dispensing process, on the other hand, so that the correct amount of filling is placed in the correct position on the respective dough portion 32.

Preferably, the cutter roll 18 is detachably attached to the traverser 8 so that it easily can be replaced with cutter rolls of other shapes than the one shown in Figure 6. It is appreciated that the number and shape of the knives of the cutter roll control the pattern that is cut out or embossed into the dough, and it is appreciated that other, alternative embodiments of cutter rolls are possible within the scope of the invention.

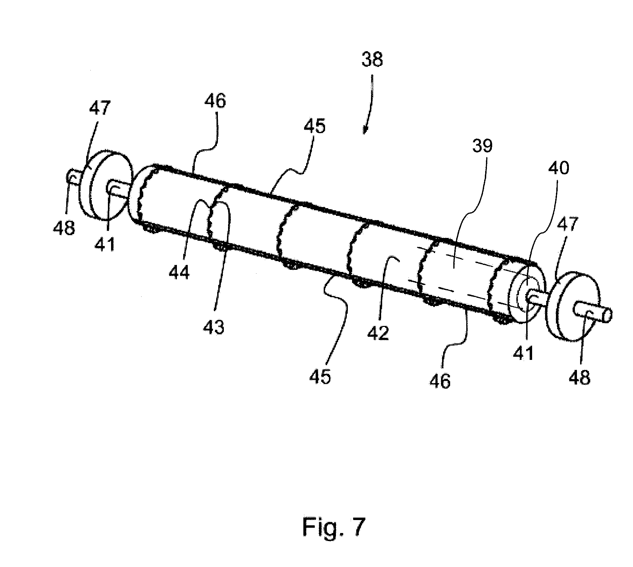

Figure 7 shows an alternative embodiment of a cutting means in the form of a cutter roll 38. The cutter roll 38 comprises a first axle portion 39 in the form of a rigid, circularly cylindrical and hollow cylinder body that exhibits, at its ends, end portions 40 which are substantially parallel with each other and substantially perpendicular to the cylinder body. The cutter roll 38 further comprises two second axle portions 41, which project from the respective end portion 40 of the first axle portion 39 and extend concentrically with the first axle portion 39. The first axle portion 39 and the second axle portions 41 are preferably of stainless steel, and are preferably joined together by welded joints.

The cutter roll 38 further comprises a substantially tubular cutting body 42 of a polymer material, preferably a food-approved rubber with a hardness of about 80°Sh. The cutting body 42 is arranged concentrically on the first axle portion 39 and is fixedly connected to the envelope surface thereof.

The cutting body 42 exhibits first cutting elements in the form of six equally shaped, concentric, length cutting knives 43, which form an integrated part of the cutting body 42 and project from the envelope surface of the cutting body 42. The knives 43 are arranged at equal mutual distances along the length of the cutting body 42, where the outer knives are positioned at the ends of the cutting body 42. Each knife 43 has an edge 44, which is preferably wavy and extends in the circumferential direction around the periphery of the cutting body 42 so that the distance between the edge 44 and the central axis of the cutter roll 38 is constant. In other words, the knives 43 have the shape of circular knives, defining parallel, equidistant cutting planes, which are perpendicular to the central axis of the cutter roll 38.

The cutter roll 28 also comprises second cutting elements in the form of two cross cutting knives 45, which also form an integrated part of the cutting body 42 and project from the envelope surface of the cutting body 42. The knives 45 extend in parallel to the central axis of the cutter roll 38 along the entire length of the cutting body 42. Each knife 45 exhibits an edge 46, which extends in a substantially straight line parallel to the central axis of the cutter roll 38. Consequently, each edge 46 is substantially perpendicular to the edges 44 of the circular knives 43. Preferably, also the edges 46 are wavy. The knives 45 project from the envelope surface of the cutting body 42 in opposite directions and thus have a mutual angular distance that is 180°.

The protrusion of the cross cutting knives 45 from the envelope surface of the cutting body 42 is equal to the protrusion of the circular knives 43. In other words, the edges 46 of the knives 45 and the edges 44 of the circular knives 43 are arranged at the same distance from the central axis of the cutter roll 38. Accordingly, the edges 44 and 46 are arranged in the same cylindrical plane of the cutter roll 38.

At each end, the cutter roll 38 comprises a circular support roller 47, which is fixedly connected to the respective axle portion 41 and is arranged concentrically thereon. In the shown embodiment, the support roller 47 has a radius that is slightly smaller, preferably approx. 0.25-1.0 mm smaller, than the radial protrusion of the edges 44 and 46 from the rotational centre of the cutter roll 38. In accordance with what has been described above, the cutter roll 38 is thus adapted to make penetrating cuts in the sheet 29. It is appreciated, however, that the support rollers 47 can be designed with a radius that is larger than the radial protrusion of the edges 44, 46, in which case the cutter roll 38 is adapted to make non-penetrating cuts in the sheet 29. The support rollers 47 are positioned at a predetermined distance, preferably approx. 2-10 cm, from the respective end of the inner axle portion 41. Accordingly, each axle portion 41 exhibits an end 48, which projects beyond the support roller 47. These axle ends 48 are adapted to interact with said axle seats 17 of the traverser 8 and thus serve as the stub axles of the cutter roll 38.

The function of the cutter roll is the same as the one of the above-described cutter roll 18. In other words, the cutter roll 38 is caused to rotate around its axis by frictional action between the support rollers 47 and the table surface 4. As described above, a certain friction is also obtained between the circular knives 43 and the table surface 4, since also the circular knives 43 interact with the table surface 4 in this case, but it is primarily the friction between the support rollers 47 and the table surface 4 that causes the cutter roll 38 to rotate when it is moved across the table surface 4. While the cutter roll 38 is moved across the table surface 4, the circular knives 43 are caused to make continuous, longitudinal and, in this case, penetrating cuts in the sheet 29 and the knife plates 45 are caused to alternately make transverse and penetrating cuts therein. As described above, by means of the support rollers 47, the cutter roll 38 is caused to rotate at a peripheral speed, which is substantially the same as the speed at which the cutter roll 38 is moved across the table surface 4, i.e. at the translational speed of the cutter roll 38. Thus, in addition to constituting positioning means for the vertical adjustment of the cutting elements 43, 45, the support rollers 47 also constitute rotating means, which cause the cutter roll 38 to rotate at a peripheral speed that substantially corresponds to the translational speed of the cutter roll 38 across the table surface 4.

Preferably, the cutting body 42 is cast in one piece, whereupon the cutting elements 43 and 45 are made by laser engraving the cast body. It is appreciated, however, that the cutting body can be manufactured in other ways.

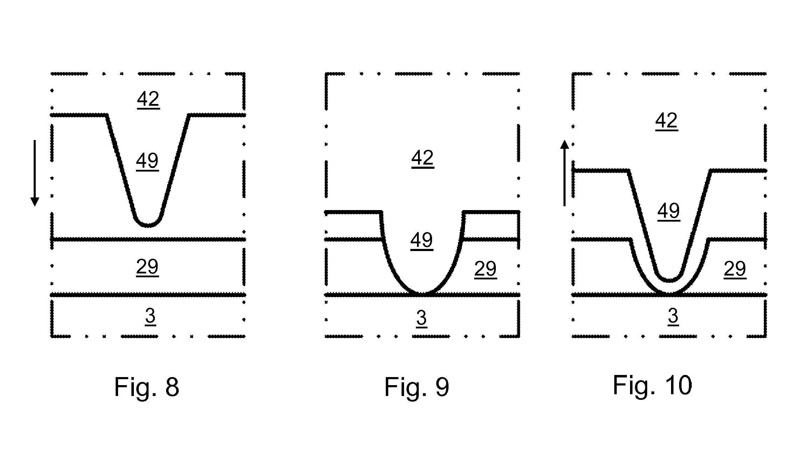

Thanks to the above-mentioned hardness of the cutting body 42, a desired combination of shape stability and resiliency of the knives 43 and 45 is obtained. Figures 8-10 illustrate how an edge of one of the knives of the cutting body 42 is deformed when the cutting body 42, in a penetrating cutting position, is moved across a dough portion 29 laid out on the table top 3 of the cutting device. As used herein, penetrating cutting position means a position where the cutting body 42 is adapted to make penetrating cuts in the dough portion 29. Figure 8 shows in a cross section a section of the edge 49 before it has been brought in contact with the dough 29, Figure 9 shows the edge section 49 in its lowermost position, when it is contact with the table top 3, and Figure 10 shows the edge section 49, when it is on its way up after having interacted with the dough 29. As is evident from Figures 8-10, the edge section 49 is deformed in that it is compressed and expands in its transverse direction when it is brought in contact with the table top 3. When the edge section 49 subsequently is lifted, it regains its original shape, whereas the dough 29, which is relatively plastic, retains the shape of the largest extension of the edge section 49. This sees to that the dough 29 easily releases from the edge section 49 and does not follow the edge section 49 in its return movement.

In the foregoing, the invention has been described on the basis of a number of specific embodiments. It is appreciated, however, that other embodiments are encompassed within the scope of the invention.

It is appreciated, for example, that the rotating means for causing the cutter roll to rotate at a peripheral speed, which substantially corresponds to its translational speed across the table surface, can be realized in a variety of different ways. The rotation of the cutter roll can e.g. be driven by a motor, which is controlled so that the peripheral speed of the cutter roll corresponds to its translational speed. It is also possible to, purely manually, achieve a synchronization between peripheral speed and translational speed without utilizing friction against the table surface of the cutting device, e.g. through a suitable system of gear wheels and gear rims.

It is also appreciated that the cutting table 1 can be designed so that the table top 3 is adjustable in the vertical direction.

It is also appreciated that said parking station 28 (see Figure 5) can be used for service and maintenance of the traverser 8.

Furthermore, it is appreciated that the edges 22, 24, 44 and 46 not necessarily have to be wavy, but alternatively can be smooth, or have other, not shown designs.

It is also appreciated that parts of the cutting table 1 can be made of a hard plastics material as, for example, polyurethane or Teflon, instead of a stainless material.

It is also appreciated that the knives 21, 23, 43, 45 do not have to be arranged so that the cutting is done exactly in the longitudinal and transverse direction of the table top. In general terms, the device can comprise cutting means which allow making of cuts in the sheet forming an angle in the interval 0°-90° with the longitudinal or transverse direction of the cutting table. It is further appreciated that these cuts do not necessarily have to be linear.

It is also possible to design the cutting device with a roll attached to the traverser for processing a plastically deformable body into a flat sheet with a predetermined thickness. Preferably, such a roll is placed in front of the cutting means, so that a rolling-out of the body can be done before the cutting. In this embodiment, the envelope surface of the roll can be provided with a circumferential distance ring, which sees to that the same thickness is achieved across the entire length of the sheet. The envelope surface of the roll can either be smooth or patterned, depending on how the top side of the sheet should look after processing.

## Claims

1. A cutting device (1) for cutting predetermined figures (32) out of an elongated, thin portion of a plastically deformable material, **characterized in that** the cutting device (1) comprises:
- a fixed table top (3)that exhibits a planar table surface (4) for supporting the elongated portion (29);
- two elongated guide and support means (7), which are arranged at each long side (5a, 5b) of the fixed table top (3) ;
- a traverser (8), which is movable along the guide and support means (7) in the longitudinal direction (L) of the table top (3), and which extends transversely to the table top (3) substantially perpendicularly to said longitudinal direction (L) and comprises a rotatable cutter roll (18, 38), which extends across the major part of the width (b) of the table top (3) and comprises cutting elements (21, 23, 43, 45) for cutting said figures (32) out of the elongated portion (29), wherein the traverser (8) is adapted to be moved along the guide and support means (7) with the cutter roll (18, 38) in a cutting position for cutting out said figures (32); and
- rotating means (26, 47) for causing the cutter roll (18, 38) to rotate, during the movement of the cutter roll (18, 38) in the cutting position, at a peripheral speed substantially corresponding to the translational speed of the cutter roll (18, 38) across the table surface (4).

2. The cutting device (1) according to claim 1, **characterized in that** the rotating means comprises support rollers (26, 47), which are arranged at the ends of the cutter roll (18, 38) for causing the cutter roll (18, 38) to rotate, by frictional action with the table surface (4), when it is moved across the table top (3) in the cutting position.

3. The cutting device (1) according to any one of the claims 1 and 2, **characterized in that** said cutting elements comprise first cutting elements (21, 43), which are adapted to make substantially longitudinal cuts in the elongated portion (29), and second cutting elements (23, 45), which are adapted to make substantially transverse cuts in the elongated portion (29).

4. The cutting device (1) according to any one of the claims 2 and 3, **characterized in that** the cutter roll (18) comprises:
- a first axle (19), which at its ends exhibits stub axles (27) resting in axle seats (17) of the traverser (8);
- a second, tubular axle (20), which is arranged concentrically on the first axle (19),
- a plurality of equally shaped circular knives (21), which each exhibits an edge (22), extending in the circumferential direction around the periphery of the circular knife (21), said circular knives (21) being arranged concentrically on the second axle (20) so that they define parallel, equidistant cutting planes which are perpendicular to said axles (19, 20), said circular knives (21) constituting first cutting elements;
- at least one planar knife plate (23), which is connected to the second axle (20) and extends in parallel to said axles (19, 20) between the outer of said circular knives (21), said at least one knife plate (23) exhibiting, at one, free long side thereof, a straight edge (24) that is perpendicular to the edges (22) of the circular knives (21), said at least one knife plate 23) constituting second cutting elements,
wherein the edges (22, 24) are arranged in the same cylindrical plane of the cutter roll (18).

5. The cutting device (1) according to claim 4, **characterized in that** it comprises support rollers (26), which are fixedly connected to the first axle (19) and are arranged concentrically thereon.

6. The cutting device (1) according to any one of the claims 2 and 3, **characterized in that** the cutter roll (38) comprises:
- a first axle portion (39) in the form of a cylinder body, which exhibits end portions (40) at its ends,
- two second axle portions (41), which project from the respective end portion (40) of the first axle portion (39) and extend concentrically with the first axle portion (39) ; and
- a substantially tubular cutting body (42), which is arranged concentrically on the first axle portion (39) and is fixedly connected to the envelope surface thereof, said cutting body (42) exhibiting cutting elements (43, 45), which form an integrated part of the cutting body (42) and project from the envelope surface of the cutting body (42) .

7. The cutting device (1) according to claim 6, **characterized in that** it comprises support rollers (47), which are fixedly connected to said second axle portions (41) and are arranged concentrically thereon.

8. The cutting device (1) according to any one of the claims 6 and 7, **characterized in that** the cutting body (42) is of a polymer material.

9. The cutting device (1) according to any one of the preceding claims, **characterized in that** the traverser (8) comprises an actuator (37) for vertical movement of the cutting means (18, 38) between an upper end position, where the cutting means (18, 38) is not in contact with the table surface (4), and a lower end position, constituting said cutting position, where said cutting elements (21, 23, 43, 45) are in contact with the table surface (4).

10. The cutting device (1) according to any one of the preceding claims, **characterized in that** the traverser (8) comprises a dispensing device (33) for dispensing filling portions (34) on said cut-out pieces (32).

11. The cutting device (1) according to claim 10, **characterized in that** the dispensing device (33) comprises a plurality of downwardly directed dispensing nozzles (35), which each are connected to a container (36) for filling, said dispensing nozzles (35) being arranged next to each other in the transverse direction (T) of the table top (3).

12. The cutting device (1) according to claim 11, **characterized in that** the dispensing nozzles (35) are permanently arranged at predetermined positions in the traverser (8).

13. The cutting device (1) according to claim 12, **characterized in that** each dispensing nozzle (35) is arranged on a carriage, which is adapted to run on a guide of the traverser (8), whereby the dispensing nozzle (35), either manually or motorizedly, is positionable in an optional position along the longitudinal direction of the traverser (8) .

14. The cutting device (1) according to any one of the preceding claims, **characterized in that** the guide and support means (7) extend a predetermined distance (s) outside of one short side (6a) of the table top (3), said projecting portion of the guide and support means (7) defining a parking station (28) for the traverser (8), in which parking station (28) the traverser (8) can be placed in order to clear the table surface (4).

15. The cutting device (1) according to any one of the claims 1-14, **characterized in that** the cutting device (1) is adapted to make penetrating cuts in the elongated portion (29) .

16. The cutting device (1) according to any one of the claims 1-14, **characterized in that** the cutting device (1) is adapted to make non-penetrating cuts in the elongated portion (29).

17. A method for cutting predetermined figures (32) out of an elongated, thin portion (29) of a plastically deformable material, said method being **characterized in that** it comprises the steps:
- that the elongated portion (29) is placed or rolled out on a fixed planar table surface (4) of a table top (3) in a cutting device (1); and
- that a traverser (8), which is included in said cutting device (1) and extends transversely to the table top (3) and comprises a cutter roll (18, 38) with cutting elements (21, 23, 43, 45), is moved in a cutting position across the elongated portion (29) stretched out on the fixed table top (3), wherein the cutter roll (18, 38) is caused to rotate at a peripheral speed that substantially corresponds to the translational speed of the cutter roll (18, 38) across the table top (3) and wherein the cutting elements (21, 23, 43, 45) are caused to cut the elongated portion(29) into said figures (32).

18. A use of a cutting device (1) according to any one of the claims 1-16 for cutting predetermined figures (32) out of a rolled-out dough of food.

## Patentansprüche

1. Schneidvorrichtung (1) zum Schneiden vorgegebener Formen (32) aus einem langgestreckten dünnen Abschnitt eines plastisch verformbaren Materials, **dadurch gekennzeichnet, dass** die Schneidvorrichtung (1) Folgendes umfasst:
- eine feststehende Tischplatte (3), die eine ebenflächige Tischoberfläche (4) zum Tragen des langgestreckten Abschnitts (29) aufweist;
- zwei langgestreckte Führungs- und Stützeinrichtungen (7), die auf jeder langen Seite (5a, 5b) der feststehenden Tischplatte (3) angeordnet sind;
- eine Traverse (8), die in Längsrichtung (L) entlang der Führungs- und Stützeinrichtung (7) der Tischplatte (3) beweglich ist, und die sich quer zur Tischplatte (3) im Wesentlichen senkrecht zu der Längsrichtung (L) erstreckt und eine drehbare Schneidwalze (18, 38) umfasst, die sich über den Hauptteil der Breite (b) der Tischplatte (3) erstreckt, und Schneidelemente (21, 23, 43, 45) zum Schneiden der Formen (32) aus dem langgestreckten Abschnitt (29) umfasst, wobei die Traverse (8) so ausgebildet ist, dass sie entlang der Führungs- und Stützeinrichtung (7) mit der Schneidwalze (18, 38) in eine Schneidposition zum Ausschneiden der Formen (32) bewegt wird; und
- eine Dreheinrichtung (26, 47) um zu bewirken, dass sich die Schneidwalze (18, 38) während der Bewegung der Schneidwalze (18, 38) in der Schneidposition mit einer Umfangsgeschwindigkeit dreht, die im Wesentlichen der Translationsgeschwindigkeit der Schneidwalze (18, 38) über die Tischoberfläche (4) entspricht.

2. Schneidvorrichtung (1) nach Anspruch 1, **dadurch gekennzeichnet, dass** die Dreheinrichtung Stützrollen (26, 47) umfasst, die an den Enden der Schneidwalze (18, 38) angeordnet sind, um zu bewirken, dass sich die Schneidwalze (18, 38) durch Reibwirkung mit der Tischoberfläche (4) dreht, wenn sie in der Schneidposition über die Tischplatte (3) bewegt wird.

3. Schneidvorrichtung (1) nach einem der Ansprüche 1 und 2, **dadurch gekennzeichnet, dass** die Schneidelemente erste Schneidelemente (21, 43), die so ausgebildet sind, dass sie im Wesentlichen längsgerichtete Schnitte in dem langgestreckten Abschnitt (29) ausführen, und zweite Schneidelemente (23, 45) umfassen, die so ausgebildet sind, dass sie im Wesentlichen quergerichtete Schnitte im langgestreckten Abschnitt (29) ausführen.

4. Schneidvorrichtung (1) nach einem der Ansprüche 2 und 3, **dadurch gekennzeichnet, dass** die Schneidwalze (18) Folgendes umfasst:
- eine erste Achse (19), die an ihren Enden Achszapfen (27) aufweist, die in Achssitzen (17) der Traverse (8) liegen;
- eine zweite röhrenförmige Achse (20), die konzentrisch auf der ersten Achse (19) angeordnet ist,
- eine Vielzahl gleich geformter Rundmesser (21), die jeweils eine Schneide (22) aufweisen, die sich in umlaufender Richtung um den Rand des Rundmessers (21) erstreckt, wobei die Rundmesser (21) konzentrisch auf der zweiten Achse (20) angeordnet sind, so dass sie parallele, abstandsgleiche Schnittebenen abgrenzen, die senkrecht zu den Achsen (19, 20) verlaufen, wobei die Rundmesser (21) erste Schneidelemente darstellen;
- mindestens eine ebenflächige Messerplatte (23), die mit der zweiten Achse (20) verbunden ist und sich parallel zu den Achsen (19, 20) zwischen den äußeren der Rundmesser (21) erstreckt, wobei die mindestens eine Messerplatte (23) an einer freien langen Seite davon eine gerade Schneide (24) aufweist, die senkrecht zu den Schneiden (22) der Rundmesser (21) verläuft, wobei die mindestens eine Messerplatte (23) zweite Schneidelemente darstellt,
wobei die Schneiden (22, 24) auf der gleichen zylindrischen Ebene der Schneidwalze (18) angeordnet sind.

5. Schneidvorrichtung (1) nach Anspruch 4, **dadurch gekennzeichnet, dass** sie Stützrollen (26) umfasst, die fest mit der ersten Achse (19) verbunden und konzentrisch darauf angeordnet sind.

6. Schneidvorrichtung (1) nach einem der Ansprüche 2 und 3, **dadurch gekennzeichnet, dass** die Schneidwalze (38) Folgendes umfasst:
- einen ersten Achsenteil (39) in Form eines Zylinderkörpers, der an seinen Enden Endteile (40) aufweist,
- zwei zweite Achsenteile (41), die aus dem jeweiligen Endteil (40) des ersten Achsenteils (39) hervorstehen und sich konzentrisch mit dem ersten Achsenteil (39) erstrecken; und
- einen im Wesentlichen röhrenförmigen Schneidkörper (42) der konzentrisch auf dem ersten Achsenteil (39) angeordnet und fest mit dessen Hüllenoberfläche verbunden ist, wobei der Schneidkörper (42) Schneidelemente (43, 45) aufweist, die einen integrierten Bestandteil des Schneidkörpers (42) ausbilden und von der Hüllenoberfläche des Schneidkörpers (42) hervorstehen.

7. Schneidvorrichtung (1) nach Anspruch 6, **dadurch gekennzeichnet, dass** sie Stützrollen (47) umfasst, die fest mit den zweiten Achsenteilen (41) verbunden und konzentrisch darauf angeordnet sind.

8. Schneidvorrichtung (1) nach einem der Ansprüche 6 und 7, **dadurch gekennzeichnet, dass** der Schneidkörper (42) aus einem Polymermaterial besteht.

9. Schneidvorrichtung (1) nach einem der vorhergehenden Ansprüche, **dadurch gekennzeichnet, dass** die Traverse (8) ein Stellglied (37) für die vertikale Bewegung des Schneidmittels (18, 38) zwischen einer oberen Endposition, in der das Schneidmittel (18, 38) nicht in Kontakt mit der Tischoberfläche (4) ist, und einer unteren Endposition umfasst, die die Schnittposition darstellt, in der die Schneidelemente (21, 23, 43, 45) in Kontakt mit der Tischoberfläche (4) sind.

10. Schneidvorrichtung (1) nach einem der vorhergehenden Ansprüche, **dadurch gekennzeichnet, dass** die Traverse (8) eine Abgabevorrichtung (33) zum Abgeben von Füllungsportionen (34) auf die ausgeschnittenen Stücke (32) umfasst.

11. Schneidvorrichtung (1) nach Anspruch 10, **dadurch gekennzeichnet, dass** die Dosiervorrichtung (33) eine Vielzahl von nach unten gerichteten Abgabedüsen (35) umfasst, die jeweils mit einem Behälter (36) zum Füllen verbunden sind, wobei die Abgabedüsen (35) nebeneinander in Querrichtung (T) zur Tischplatte (3) angeordnet sind.

12. Schneidvorrichtung (1) nach Anspruch 11, **dadurch gekennzeichnet, dass** die Abgabedüsen (35) in der Traverse (8) dauerhaft in vorgegebenen Positionen angeordnet sind.

13. Schneidvorrichtung (1) nach Anspruch 12, **dadurch gekennzeichnet, dass** jede Abgabedüse (35) auf einem Schlitten angeordnet ist, der so ausgebildet ist, dass er auf einer Führung der Traverse (8) läuft, wobei die Abgabedüse (35) entweder manuell oder motorisiert an einer optionalen Position entlang der Längsrichtung der Traverse (8) positionierbar ist.

14. Schneidvorrichtung (1) nach einem der vorhergehenden Ansprüche, **dadurch gekennzeichnet, dass** sich die Führungs- und Stützeinrichtung (7) eine vorgegebene Strecke (s) außerhalb der kurzen Seite (6a) der Tischplatte (3) erstreckt, wobei der hervorstehende Teil der Führungs- und Stützeinrichtung (7) eine Parkstation (28) für die Traverse (8) abgrenzt, auf welcher Parkstation (28) die Traverse (8) positioniert werden kann, um die Tischoberfläche (4) frei zu machen.

15. Schneidvorrichtung (1) nach einem der Ansprüche 1-14, **dadurch gekennzeichnet, dass** die Schneidvorrichtung (1) so ausgebildet ist, dass sie durchdringende Schnitte in dem langgestreckten Abschnitt (29) ausführt.

16. Schneidvorrichtung (1) nach einem der Ansprüche 1-14, **dadurch gekennzeichnet, dass** die Schneidvorrichtung (1) so ausgebildet ist, dass sie nicht durchdringende Schnitte in dem langgestreckten Abschnitt (29) ausführt.

17. Verfahren zum Schneiden vorgegebener Formen (32) aus einem langgestreckten dünnen Abschnitt (29) eines plastisch verformbaren Materials, wobei das Verfahren **dadurch gekennzeichnet ist, dass** es die folgenden Schritte umfasst:
- dass der langgestreckte Abschnitt (29) auf einer festen ebenflächigen Tischoberfläche (4) einer Tischplatte (3) in einer Schneidvorrichtung (1) platziert oder ausgerollt wird; und
- dass eine Traverse (8), die in der Schneidvorrichtung (1) beinhaltet ist und sich quer zur Tischplatte (3) erstreckt und eine Schneidwalze (18, 38) mit Schneidelementen (21, 23, 43, 45) umfasst, in eine Schneidposition über die langgestreckte Portion (29) bewegt wird, die auf der festen Tischplatte (3) ausgestreckt ist, wobei die Schneidwalze (18, 38) dazu veranlasst wird, sich mit einer Umfangsgeschwindigkeit zu drehen, die im Wesentlichen der Translationsgeschwindigkeit der Schneidwalze (18, 38) über die Tischplatte (3) entspricht, und wobei die Schneidelemente (21, 23, 43, 45) dazu veranlasst werden, dem langgestreckten Abschnitt (29) in die Formen (32) zu schneiden.

18. Verwendung einer Schneidvorrichtung (1) nach einem der Ansprüche 1-16 zum Schneiden vorgegebener Formen (32) aus einem ausgerollten Speiseteig.

## Revendications

1. Dispositif de découpe (1) pour découper des figures prédéterminées (32) dans une partie mince allongée d'un matériau déformable plastiquement, **caractérisé en ce que** le dispositif de découpe (1) comprend :
- un plateau de table fixe (3) qui présente une surface de table plane (4) pour soutenir la partie allongée (29) ;
- deux moyens de guidage et de soutien allongés (7), qui sont disposés au niveau de chaque longueur (5a, 5b) du plateau de table fixe (3) ;
- un élément traversant (8), qui est mobile le long des moyens de guidage et de soutien (7) dans la direction longitudinale (L) du plateau de table (3), et qui s'étend de manière transversale jusqu'au plateau de table (3) de manière sensiblement perpendiculaire à ladite direction longitudinale (L) et comprend un rouleau de dispositif de découpe rotatif (18, 38), qui s'étend sur la majeure partie de la largeur (b) du plateau de table (3) et comprend des éléments de découpe (21, 23, 43, 45) pour découper lesdites figures (32) dans la partie allongée (29), dans lequel l'élément traversant (8) est adapté pour se déplacer le long des moyens de guidage et de soutien (7) avec le rouleau de dispositif de découpe (18, 38) dans une position de découpe pour découper lesdites figures (32) ; et
- des moyens rotatifs (26, 47) pour faire tourner le rouleau de dispositif de découpe (18, 38), durant le déplacement du rouleau de dispositif de découpe (18, 38) dans la position de coupe, à une vitesse périphérique correspondant sensiblement à la vitesse de translation du rouleau de dispositif de découpe (18, 38) sur la surface de table (4).

2. Dispositif de découpe (1) selon la revendication 1, **caractérisé en ce que** le moyen rotatif comprend des galets de soutien (26, 47), qui sont disposés aux extrémités du rouleau de dispositif de découpe (18, 38) pour entraîner la rotation du rouleau de dispositif de découpe (18, 38), par action de frottement avec la surface de table (4), lorsqu'il se déplace sur le plateau de table (3) dans la position de découpe.

3. Dispositif de découpe (1) selon l'une quelconque des revendications 1 et 2, **caractérisé en ce que** lesdits éléments de découpe comprennent des premiers éléments de découpe (21, 43), qui sont adaptés pour réaliser des découpes sensiblement longitudinales dans la partie allongée (29), et des deuxièmes éléments de découpe (23, 45), qui sont adaptés pour réaliser des découpes sensiblement transversales dans la partie allongée (29).

4. Dispositif de découpe (1) selon l'une quelconque des revendications 2 et 3, **caractérisé en ce que** le rouleau de dispositif de découpe (18) comprend :
- un premier essieu (19), qui a ses extrémités présente des demi-essieux (27) reposant dans des sièges d'essieu (17) de l'élément traversant (8) ;
- un deuxième essieu tubulaire (20) qui est disposé de manière concentrique sur le premier essieu (19),
- une pluralité de cisailles circulaires de même forme (21), qui présentent toutes un bord (22), qui s'étend dans la direction circonférentielle autour de la périphérie de la cisaille circulaire (21), lesdites cisailles circulaires (21) étant disposées de manière concentrique sur le deuxième essieu (20) de sorte qu'elles définissent des plans de découpe équidistants parallèles qui sont perpendiculaires auxdits essieux (19, 20), lesdites cisailles circulaires (21) constituant des premiers éléments de découpe ;
- au moins un porte-cisaille plan (23), qui est relié au deuxième essieu (20) et qui s'étend en parallèle auxdits essieux (19, 20) entre lesdites cisailles circulaires extérieures (21), ledit au moins un porte-cisaille (23) présentant, sur une longueur libre de celui-ci, un bord droit (24) qui est perpendiculaire aux bords (22) des cisailles circulaires (21), ledit au moins un porte-cisaille (23) constituant des deuxièmes éléments de découpe,
dans lequel les bords (22, 24) sont disposés dans le même plan cylindrique du rouleau de dispositif de découpe (18).

5. Dispositif de découpe (1) selon la revendication 4, **caractérisé en ce qu'**il comprend des galets de soutien (26), qui sont reliés de manière fixe au premier essieu (19) et qui sont disposés de manière concentrique sur celui-ci.

6. Dispositif de découpe (1) selon l'une quelconque des revendications 2 et 3, **caractérisé en ce que** le rouleau de dispositif de découpe (38) comprend :
- une première partie d'essieu (39) sous la forme d'un corps de cylindre, qui présente des parties d'extrémité (40) à ses extrémités,
- deux deuxièmes parties d'essieu (41), qui font saillie depuis la partie d'extrémité respective (40) de la première partie d'essieu (39) et qui s'étendent de manière concentrique avec la première partie d'essieu (39) ; et
- un corps de découpe sensiblement tubulaire (42), qui est disposé de manière concentrique sur la première partie d'essieu (39) et qui est reliée de manière fixe à sa surface d'enveloppe, ledit corps de découpe (42) présentant des éléments de découpe (43, 45), qui font partie intégrante du corps de découpe (42) et qui font saillie depuis la surface d'enveloppe du corps de découpe (42).

7. Dispositif de découpe (1) selon la revendication 6, **caractérisé en ce qu'il** comprend des galets de soutien (47), qui sont reliés de manière fixe auxdites deuxièmes parties d'essieu (41) et qui sont disposés de manière concentrique sur celles-ci.

8. Dispositif de découpe (1) selon l'une quelconque des revendications 6 et 7, **caractérisé en ce que** le corps de découpe (42) est constitué d'un matériau polymère.

9. Dispositif de découpe (1) selon l'une quelconque des revendications précédentes, **caractérisé en ce que** l'élément traversant (8) comprend un actionneur (37) pour le mouvement vertical du moyen de découpe (18, 38) entre une position d'extrémité supérieure, dans laquelle le moyen de découpe (18, 38) n'est pas en contact avec la surface de table (4), et une position d'extrémité inférieure, constituant ladite position de découpe, dans laquelle lesdits éléments de découpe (21, 23, 43, 45) sont en contact avec la surface de table (4).

10. Dispositif de découpe (1) selon l'une quelconque des revendications précédentes, **caractérisé en ce que** l'élément traversant (8) comprend un dispositif de distribution (33) pour distribuer des parties de remplissage (34) sur lesdites pièces découpées (32).

11. Dispositif de découpe (1) selon la revendication 10, **caractérisé en ce que** le dispositif de distribution (33) comprend une pluralité de buses de distribution orientées vers le bas (35), qui sont toutes reliées à un récipient (36) à remplir, lesdites buses de distribution (35) étant disposées les unes à côté des autres dans la direction transversale (T) du plateau de table (3).

12. Dispositif de découpe (1) selon la revendication 11, **caractérisé en ce que** les buses de distribution (35) sont disposées de manière permanente à des positions prédéterminées dans l'élément traversant (8).

13. Dispositif de découpe (1) selon la revendication 12, **caractérisé en ce que** chaque buse de distribution (35) est disposée sur un chariot, qui est adapté pour se déplacer sur une partie de guidage de l'élément traversant (8), la buse de distribution pouvant être positionnée (35), de manière manuelle ou motorisée, dans une position facultative le long de la direction longitudinale de l'élément traversant (8).

14. Dispositif de découpe (1) selon l'une quelconque des revendications précédentes, **caractérisé en ce que** les moyens de guidage et de support (7) s'étendent à une distance prédéterminée (s) à l'extérieur d'un côté court (6a) du plateau de table (3), ladite partie saillante des moyens de guidage et de soutien (7) définissant une station de repos (28) pour l'élément traversant (8), la station de repos (28) dans laquelle l'élément traversant (8) peut être placé afin de libérer la surface de table (4).

15. Dispositif de découpe (1) selon l'une quelconque des revendications 1 à 14, **caractérisé en ce que** le dispositif de découpe (1) est adapté pour réaliser des découpes pénétrantes dans la partie allongée (29).

16. Dispositif de découpe (1) selon l'une quelconque des revendications 1 à 14, **caractérisé en ce que** le dispositif de découpe (1) est adapté pour réaliser des découpes pénétrantes dans la partie allongée (29).

17. Procédé pour découper des figures prédéterminées (32) dans une partie mince allongée (29) d'un matériau déformable plastiquement, ledit procédé étant **caractérisé en ce qu'**il comprend les étapes suivantes :
- la partie allongée (29) est placée ou abaissée sur une surface de table plane fixe (4) d'un plateau de table (3) dans un dispositif de découpe (1) ; et
- un élément traversant (8), qui est inclus dans ledit dispositif de découpe (1) et qui s'étend de manière transversale jusqu'au plateau de table (3) et comprend un rouleau de dispositif de découpe (18, 38) avec des éléments de découpe (21, 23, 43, 45), est déplacé dans une position de découpe sur la partie allongée (29) étirée sur le plateau de table fixe (3), dans lequel le rouleau de dispositif de découpe (18, 38) est amené à tourner à une vitesse périphérique qui correspond sensiblement à la vitesse de translation du rouleau de dispositif de découpe (18, 38) sur le plateau de table (3) et dans lequel les éléments de découpe (21, 23, 43, 45) sont amenés à découper la partie allongée (29) dans lesdites figures (32).

18. Utilisation d'un dispositif de découpe (1) selon l'une quelconque des revendications 1 à 16 pour découper des figures prédéterminées (32) dans une pâte alimentaire abaissée.
